Europäisches Patentamt

European Patent Office

Office européen des brevets

(19)

(11) EP 1 553 007 A1

(12) EUROPEAN PATENT APPLICATION
published in accordance with Art. 158(3) EPC

(43) Date of publication:
13.07.2005 Bulletin 2005/28

(51) Int Cl.⁷: B62D 6/00, B62D 5/04

(21) Application number: 03766641.9

(22) Date of filing: 28.07.2003

(86) International application number:
PCT/JP2003/009512

(87) International publication number:
WO 2004/012977 (12.02.2004 Gazette 2004/07)

(84) Designated Contracting States:
DE FR GB

(30) Priority: 02.08.2002 JP 2002225676

(71) Applicants:
• Advics Co., Ltd.
Kariya-shi, Aichi 448-8650 (JP)
• Daihatsu Motor Co., Ltd.
Ikeda-shi, Osaka 563-8651 (JP)

(72) Inventors:
• KATO, Toshihisa c/o Advics Co., Ltd.
Kariya-shi, Aichi 448-8650 (JP)
• FUKAMI, Masanobu c/o Advics Co., Ltd.
Kariya-shi, Aichi 448-8650 (JP)
• YAKUSHIJIN, Tokio c/o Daihatsu Motor Co., Ltd.
Ikeda-shi, Osaka 563-8651 (JP)

(74) Representative: Vollnhals, Aurel
Tiedtke-Bühling-Kinne & Partner (GbR),
TBK-Patent,
Bavariaring 4
80336 München (DE)

(54) STEERING DEVICE OF VEHICLE

(57)     A steering apparatus for a vehicle calculates an assist force F1 corresponding to a steering torque T of a driver on the basis of a table shown in Step 605 in such a manner that the assist force F1 changes in proportion to the steering torque T, and further calculates a coefficient Kt corresponding to the absolute value of an actual lateral acceleration Gy on the basis of a table shown in Step 610. The apparatus calculates a final assist force F through multiplication of the assist force F1 by the coefficient Kt, and controls an electric motor of a steering actuator so as to generate the final assist force F for the steering operation of the driver. As a result, when the absolute value of the actual lateral acceleration Gy is not less than a value Gyth, the final assist force F decreases with an increase in the absolute value, whereby abrupt steering operation by the driver can be avoided.

FIG.6

## Description

TECHNICAL FIELD

The present invention relates to a steering apparatus for a vehicle equipped with a steerable-wheel steering mechanism for changing the steering angle of steerable wheels of the vehicle in accordance with displacement of a steering member operated by a driver.

BACKGROUND ART

Conventionally, there has been demand for controlling motion of a vehicle so as to prevent the vehicle from entering an unstable condition during turning, which unstable condition would otherwise result from an excessive roll angle of the vehicle body. The magnitude of such roll angle depends on the magnitude of actual lateral acceleration, which is a component of acceleration acting on the vehicle as measured along the lateral direction of the vehicle body, and increases with the actual lateral acceleration. Meanwhile, the magnitude of the actual lateral acceleration acting on the vehicle can be lowered through generation of a yawing moment in a direction opposite the turning direction of the vehicle.

In view of the above, a motion control apparatus for a vehicle disclosed in, for example, Japanese Patent Application Laid-Open (*kokai*) No. 10-119743 is configured in such a manner that when a vehicle is turning, braking forces applied to individual wheels are controlled in accordance with roll angle of the vehicle body so as to generate a yawing moment in a direction opposite the turning direction of the vehicle. When such a motion control apparatus is employed, during a period in which a vehicle is turning, braking forces applied to individual wheels are controlled so that the yawing moment in the direction opposite the turning direction of the vehicle increases in accordance with roll angle of the vehicle body. Thus, the magnitude of lateral acceleration acting on the vehicle is lowered when the roll angle of the vehicle increases, and as a result, the vehicle body is prevented from rolling excessively.

However, even during periods in which the motion of a vehicle during turning is controlled by the above-mentioned, disclosed apparatus, in some cases the vehicle body may roll excessively. For example, in a case where the steering angle of steerable wheels of a vehicle abruptly increases toward a turning direction of the vehicle as a result of abrupt operation of a steering member by a driver in the turning direction (abrupt additional steering), since the roll angle of the vehicle body increases at high speed, in many cases difficulty may be encountered in generating a yawing moment in a direction opposite the turning direction of the vehicle so as to suppress abrupt increase in the roll angle, by means of braking forces applied to the individual wheels.

DISCLOSURE OF THE INVENTION

An object of the present invention is to provide a steering apparatus for a vehicle which prevents the steering angle of steerable wheels of the vehicle from abruptly changing in response to abrupt steering operation by a driver when the vehicle tends to roll excessively during turning.

The present invention is directed to a steering apparatus for a vehicle equipped with a steerable-wheel steering mechanism which changes the steering angle of steerable wheels of the vehicle in accordance with displacement of a steering member operated by a driver and which generates a quantity related to assist force for assisting the operation of the steering member (hereinafter referred to as "assist force related quantity") in accordance with a quantity related to operating force applied to the steering member by the driver (hereinafter referred to as "steering-member operating force related quantity") and on the basis of a predetermined characteristic. According to a first feature of the present invention, the steering apparatus comprises index value obtaining means for obtaining an excessive roll generating tendency index value indicating the degree of a tendency of the vehicle to roll excessively; and steering characteristic changing means for changing the predetermined characteristic in accordance with the excessive roll generating tendency index value.

Here, the "steering member" may be a so-called steering wheel for changing the steering angle of the steerable wheels of the vehicle through rotational operation, or a lever (a so-called joystick) for changing the steering angle of the steerable wheels of the vehicle through translational operation, and is not limited thereto. Moreover, the "steering-member operating force related quantity" may be operating force (steering force) or operating torque (steering torque) which is applied to the steering member when the driver operates the same, but is not limited thereto. The "assist force related quantity" may be assist force or assist torque generated by means of the steerable-wheel steering mechanism, but is not limited thereto. The "excessive roll generating tendency index value" is preferably a value based on at least one of lateral acceleration, which is a component of acceleration acting on the vehicle in a vehicle-body lateral direction, roll angle of the vehicle, and operating speed of the steering member.

By virtue of the above-described configuration, in an example case where the excessive roll generating tendency index value obtained by means of the index value obtaining means assumes a value that indicates a high tendency of the vehicle to roll excessively (e.g., when a large lateral acceleration acts on the vehicle), the quantity related to assist force that the steerable-wheel steering mechanism generates for a certain steering-member operating force relating quantity can be reduced as compared with the case where the tendency is low.

Accordingly, the required steering-member operating force related quantity increases (i.e., the driver needs a larger operating force to operate the steering member), and thus it becomes difficult for the driver to perform abrupt steering operation, whereby the steering angle of the steerable wheels of the vehicle is prevented from increasing abruptly in the turning direction. As a result, the increasing speed of the roll angle of the vehicle body decreases, and before the increasing roll angle becomes excessive, sufficient time can be given to the driver to perform, for example, steering operation in a direction for decreasing the roll angle, whereby the vehicle body is prevented from rolling excessively.

The present invention is also directed to a steering apparatus for a vehicle equipped with a steerable-wheel steering mechanism which changes the steering angle of steerable wheels of the vehicle in accordance with position of a steering member operated by a driver and on the basis of a predetermined characteristic. According to a second feature of the present invention, the steering apparatus comprises index value obtaining means for obtaining an excessive roll generating tendency index value indicating the degree of a tendency of the vehicle to roll excessively; and steering characteristic changing means for changing the predetermined characteristic in accordance with the excessive roll generating tendency index value.

In this case as well, the "steering member" may be a so-called steering wheel for changing the steering angle of the steerable wheels of the vehicle through rotational operation or a lever (a so-called joystick) for changing the steering angle of the steerable wheels of the vehicle through translational operation, and is not limited thereto. Moreover, the "excessive roll generating tendency index value" is preferably a value based on at least one of lateral acceleration, which is a lateral component of acceleration acting on the vehicle, roll angle of the vehicle, and operating speed of the steering member.

By virtue of the above-described configuration, in an example case where the excessive roll generating tendency index value obtained by means of the index value obtaining means assumes a value that indicates a high tendency of the vehicle to roll excessively (e.g., when a large lateral acceleration acts on the vehicle), the steering angle (deviation angle) of the steerable wheels (with respect to a reference angle at which the vehicle travels straight) which is determined by the steerable-wheel steering mechanism for a certain steering-member position (e.g., a certain rotation angle with respect to the neutral position in the case of a steering wheel) can be decreased as compared with the case where the tendency is low.

Accordingly, even when the driver performs an abrupt steering operation in the turning direction (abrupt additional steering operation), the increase amount (change amount, increasing speed (changing speed)) of the steering angle of the steerable wheels of the vehicle decreases, whereby the steering angle of the steerable wheels of the vehicle is prevented from increasing abruptly in the turning direction. As a result, the increasing speed of the roll angle of the vehicle body decreases, and before the increasing roll angle becomes excessive, sufficient time can be given to the driver to perform, for example, steering operation in a direction for decreasing the roll angle, whereby the vehicle body is prevented from rolling excessively.

The steering apparatus for a vehicle of the present invention having the above-described first or second feature may employ control for generating a yawing moment in a direction opposite a turning direction of the vehicle, by means of braking forces applied to the individual wheels, so as to suppress an increase in the roll angle of the vehicle body. This control, together with the above-mentioned effects of the present invention, prevents excessive rolling of the vehicle body in a more reliable manner.

BRIEF DESCRIPTION OF THE DRAWINGS

FIG. 1 is a schematic diagram of a vehicle equipped with a vehicle motion control apparatus which includes a steering apparatus for a vehicle according to a first embodiment of the present invention.
FIG. 2 is a schematic view of the steering actuator shown in FIG. 1.
FIG. 3 is a schematic diagram of the brake fluid pressure controller shown in FIG. 1.
FIG. 4 is a table which the CPU shown in FIG. 1 uses so as to calculate assist force corresponding to driver's steering torque in the process for obtaining final assist torque, the table showing, the relation between driver's steering torque and assist torque to be generated in accordance the steering torque.
FIG. 5 a table which the CPU shown in FIG. 1 uses so as to calculate a coefficient Kt in the process for obtaining final assist torque, the table showing the relation between the absolute value of actual lateral acceleration and the coefficient Kt.
FIG. 6 is a flow chart showing a routine by which the CPU shown in FIG. 1 calculates the final assist force.
FIG. 7 is a flow chart showing a routine by which the CPU shown in FIG. 1 calculates wheel speeds and other parameters.
FIG. 8 is a flow chart showing a routine by which the CPU shown in FIG. 1 calculates a lateral acceleration deviation.
FIG. 9 is a flow chart showing a routine by which the CPU shown in FIG. 1 calculates a target slip rate.
FIG. 10 is a flow chart showing a routine by which the CPU shown in FIG. 1 sets the control mode.

FIG. 11 is a flow chart showing a routine by which the CPU shown in FIG. 1 controls the braking force applied to each wheel.

FIG. 12 is a schematic diagram of a vehicle equipped with a vehicle motion control apparatus which includes a steering apparatus for a vehicle according to a second embodiment of the present invention.

FIG. 13 is a schematic view of the steering angle ratio variable actuator shown in FIG. 12.

FIG. 14 is a flow chart showing a routine by which the CPU shown in FIG. 12 calculates and controls the steering angle ratio.

FIG. 15 is a flow chart showing a routine by which the CPU shown in FIG. 1 or FIG. 12 calculates the roll angle.

## BEST MODE FOR CARRYING OUT THE INVENTION

Below, embodiments of a steering apparatus for a vehicle according to the present invention will be described while referring to the drawings.

(First Embodiment)

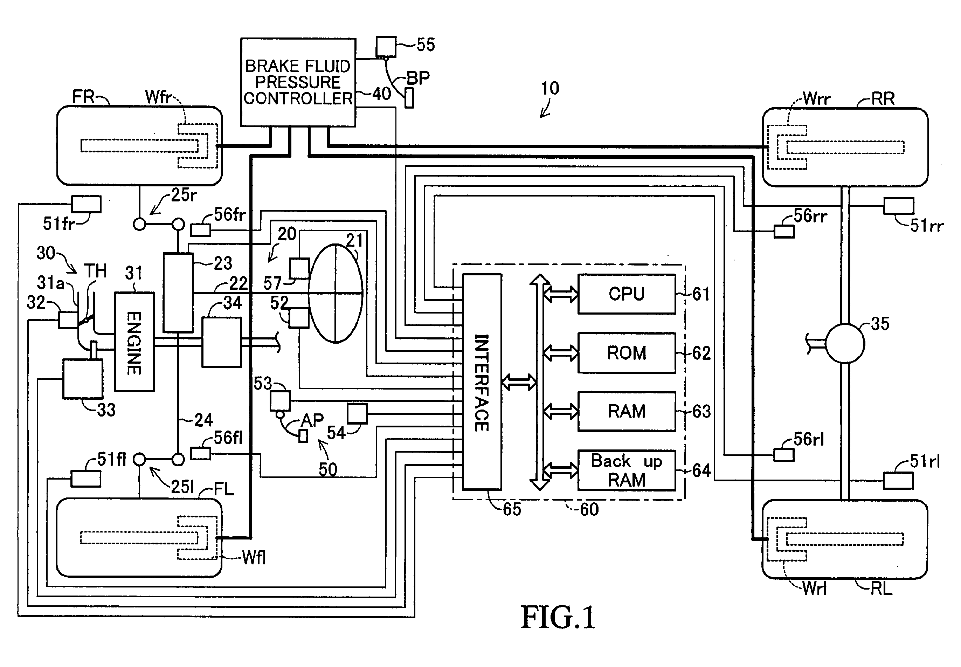

FIG. 1 schematically illustrates a vehicle on which a vehicle motion control apparatus 10 including a steering apparatus for a vehicle according to the first embodiment of the present invention is mounted. The illustrated vehicle is a four-wheel, rear-wheel drive vehicle having two front wheels (a front left wheel FL and a front right wheel FR) which are steerable, nondriven wheels, and two rear wheels (a rear left wheel RL and a rear right wheel RR) which are driven wheels.

This vehicle motion control apparatus 10 has a front-wheel steering mechanism portion 20 serving as a steerable-wheel steering mechanism for steering the steerable wheels FL and FR; a drive force transmission mechanism portion 30 which generates a drive force and transmits it to the drive wheels RL and RR; a brake fluid pressure controller 40 for generating a braking force in each wheel by brake fluid pressure; a sensor portion 50 comprising various sensors; and an electronic controller 60. Notably, the front wheel steering mechanism portion 20, the sensor portion 50, and the electronic controller 60 constitute the steering apparatus for a vehicle according to the first embodiment of the present invention.

The front-wheel steering mechanism portion 20 comprises a steering wheel 21 to be rotated by a driver; a steering column 22 which is rotatable together with the steering wheel 21 and extends in the fore and aft direction of the vehicle body; a steering actuator 23 which is linked to the steering column 22; a tie rod 24 to be moved in the lateral direction of the vehicle body by the steering actuator 23; and left and right links 251 and 25r which can turn the steerable wheels FL and FR by the movement of the tie rod 24.

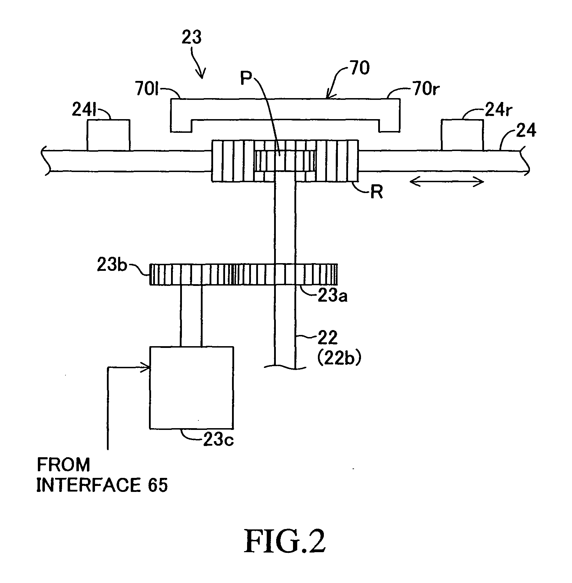

The steering actuator 23 is a so-called electric power steering apparatus. As shown in FIG. 2, which is a schematic view of the steering actuator 23, the steering actuator 23 includes a rack R integrally formed with the tie rod 24; a pinion P integrally fixed to an end portion of the steering column 22 toward the front of the vehicle body and being meshed with the rack R; a circular external gear 23a which is coaxial with the pinion P and integrally fixed to an intermediate portion of the column 22 with respect to the fore and aft direction of the vehicle body; a circular external gear 23b in meshing engagement with the circular external gear 23a; and an electric motor 23c having an output shaft which extends in the fore and aft direction of the vehicle body and which supports the circular external gear 23b fixed to one end thereof.

The electric motor 23c generates (final) assist force F for moving the tie rod 24 in a direction for assisting the rotating operation of the steering wheel 21 by the driver, as will be described later, in accordance with a rotation torque (steering torque) applied to the steering wheel 21 (i.e., the steering column 22) by the driver.

A left-hand stopper 241 and a right-hand stopper 24r, which are separated from each other by a predetermined distance in the lateral direction of the vehicle body, are fixedly disposed on the tie rod 24. The left end position of a movable range of the tie rod 24 in the lateral direction of the vehicle body corresponds to a position at which the right-hand stopper 24r comes into contact with a right end portion 70r of a stationary member 70 fixed to the vehicle body; and the right end position of the movable range corresponds to a position at which the left-hand stopper 241 comes into contact with a left end portion 701 of the stationary member 70.

By virtue of the above-described structure, when the steering wheel 21 is rotated by the driver from a neutral position (a reference position), the steering angle of the steerable wheels FL and FR is changed from a reference angle at which the vehicle travels straight. The steering gear ratio of the front-wheel steering mechanism portion 20 (the ratio of a change in rotational angle of the steering wheel 21 to a change in steering angle of the steerable wheels FL and FR) has a constant value of 20.

The drive force transmission mechanism portion 30 comprises an engine 31 which generates a drive force, a throttle valve actuator 32 comprising a DC motor which controls the opening of a throttle valve TH which is disposed in the intake pipe 31 a of the engine 31 and which varies the open cross-sectional area of the intake pipe 31 a, a fuel injection apparatus 33 which includes unillustrated fuel injectors which spray fuel in the vicinity of unillustrated intake ports of the engine 31, a transmission 34 which is connected to an output shaft of the engine 31, and a differential gear 35 which distributes the drive force which is transmitted from the transmission 34 between the rear wheels RR and RL.

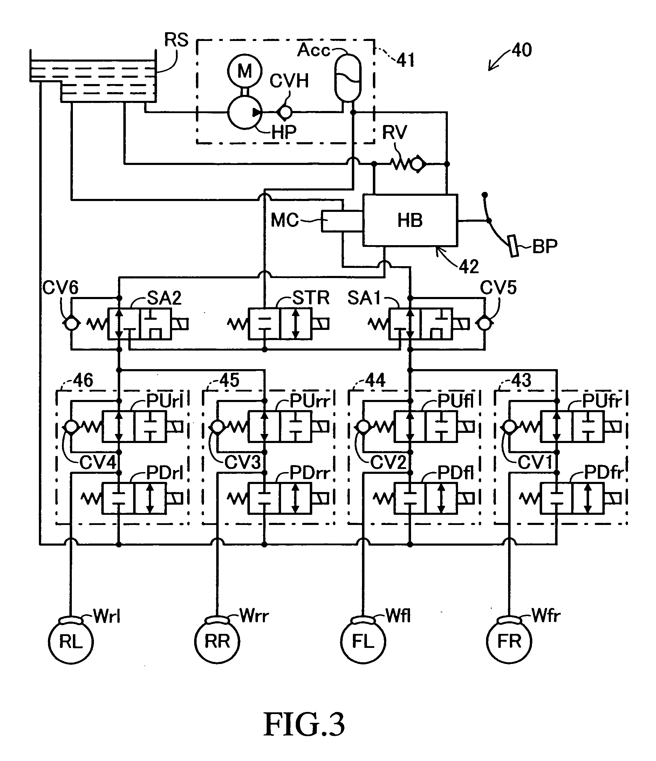

As schematically shown in FIG. 3, the brake fluid pressure controller 40 includes a high pressure generating portion 41, a brake fluid pressure generating portion 42 which generates brake fluid pressure in response to the operating force of a brake pedal BP, a brake fluid pressure adjuster 43 for the front right wheel FR, a brake fluid pressure adjuster 44 for the front left wheel FL, a brake fluid pressure adjuster 45 for the rear right wheel RR, and a brake fluid pressure adjuster 46 for the rear left wheel RL which are respectively installed on wheels FR, FL, RR, and RL and can adjust the brake fluid pressure supplied to the corresponding wheel cylinders Wfr, Wfl, Wrr, and Wrl.

The high pressure generating portion 41 includes an electric motor M, a hydraulic pump HP which is driven by the electric motor M and increases the pressure of brake fluid from a reservoir RS, and an accumulator Acc which is connected to the discharge side of the hydraulic pump HP through a check valve CVH and which stores brake fluid which is increased in pressure by the hydraulic pump HP.

The electric motor M is driven when the fluid pressure in the accumulator Acc falls below a prescribed lower limit, and it stops when the fluid pressure in the accumulator Acc exceeds a prescribed upper limit. As a result, the fluid pressure in the accumulator Acc is always maintained at a high pressure within a prescribed range.

A relief valve RV is installed between the accumulator Acc and the reservoir RS. When the fluid pressure in the accumulator Acc becomes an abnormally high pressure above the above-mentioned high pressure, brake fluid within the accumulator Acc is returned to the reservoir RS. As a result, the hydraulic circuit of the high pressure generating portion 41 is protected.

The brake fluid pressure generating portion 42 includes a hydraulic booster HB which operates in response to the operation of the brake pedal BP, and a master cylinder MC which is linked to the hydraulic booster HB. The hydraulic booster HB utilizes the high pressure which is supplied from the fluid pressure high pressure generating portion 41 to assist the operating force of the brake pedal BP by a prescribed ratio and transmits the assisted operating force to the master cylinder MC.

The master cylinder MC generates a master cylinder fluid pressure corresponding to the assisted operating force. The hydraulic booster HB receives the master cylinder fluid pressure and generates a regulator fluid pressure corresponding to the assisted operating force which is approximately the same fluid pressure as the master cylinder fluid pressure. The structure and operation of the master cylinder MC and the hydraulic booster HB are well known, so an explanation of the details thereof will be omitted. In this manner, the master cylinder MC and the hydraulic booster HB respectively generate a master cylinder fluid pressure and a regulator fluid pressure in accordance with the operating force of the brake pedal BP.

A control valve SA1, which is a 3-port, 2-position solenoid valve, is disposed between the master cylinder MC and the upstream side of the brake fluid pressure adjuster 43 for the front right wheel FR and the upstream side of the brake fluid pressure fluid pressure adjuster 44 for the front left wheel FL. Similarly, a control valve SA2, which is also a 3-port, 2-position solenoid valve, is disposed between the hydraulic booster HB and the upstream side of the brake fluid pressure adjuster 45 for the rear right wheel RR and the upstream side of the brake fluid pressure fluid pressure adjuster 46 for the rear left wheel RL. A switching valve STR, which is a 2-port, 2-position, normally closed solenoid valve, is disposed between the high pressure generating portion 41 and the control valves SA1 and SA2.

When the control valve SA1 is in its first position (a position in a nonenergized state) shown in FIG. 3, it connects the master cylinder MC to the upstream side of the brake fluid pressure adjuster 43 for the front right wheel FR and the upstream side of the brake fluid pressure adjuster 44 for the front left wheel FL, and when it is in its second position (its position in an energized state), it cuts off communication between the master cylinder MC and the upstream side of the brake fluid pressure adjuster 43 for the front right wheel FR and the upstream side of the brake fluid pressure adjuster 44 for the front left wheel FL, and it connects the switching valve STR and the upstream side of the brake fluid pressure adjuster 43 for the front right wheel FR and the upstream side of the brake fluid pressure adjuster 44 for the front left wheel FL.

When the control valve SA2 is in its first position shown in FIG. 3 (the position corresponding to a nonenergized state), it connects the hydraulic booster HB to the upstream side of the brake fluid pressure adjuster 45 for the rear right wheel RR and the upstream side of the brake fluid pressure adjuster 46 for the rear left wheel RL, and when it is in its second position (the position corresponding to an energized state), it cuts off communication of the hydraulic booster HB to the upstream side of the brake fluid pressure adjuster 45 for the rear right wheel RR and the upstream side of the brake fluid pressure adjuster 46 for the rear left wheel RL, and it connects the switching valve STR to the upstream side of the brake fluid pressure adjuster 45 for the rear right wheel RR and the upstream side of the brake fluid pressure adjuster 46 for the rear left wheel RL.

As a result, when the control valve SA1 is in its first position, the master cylinder fluid pressure is supplied to the upstream side of the brake fluid pressure adjuster 43 for the front right wheel FR and the upstream side of the brake fluid pressure adjuster 44 for the front left wheel FL, and when the control valve SA1 is in its second position and the switching valve STR is in its second position (the position corresponding to an energized state), the high pressure generated in the high pressure generating portion 41 is supplied to the upstream side of the brake fluid pressure adjuster 43 and the upstream side of the brake fluid pressure adjuster 44.

Similarly, when the control valve SA2 is in its first position, the regulator fluid pressure from the hydraulic booster HB is supplied to the upstream side of the brake fluid pressure adjuster 45 for the rear right wheel RR and the upstream side of the brake fluid pressure adjuster 46 for the rear left wheel RL, and when the control valve SA2 is in its second position and the switching valve STR is in its second position, the high pressure generated in the high pressure generating portion 41 is supplied to the upstream side of the brake fluid pressure adjuster 45 and the upstream side of the brake fluid pressure adjuster 46.

The brake fluid pressure adjuster 43 for the front right wheel FR comprises a pressure increasing valve PUfr, which is a 2-port, 2-position, normally open solenoid valve, and a pressure reducing valve PDfr, which is a 2-port, 2-position, normally closed solenoid valve. When the pressure increasing valve PUfr is in its first position shown in FIG. 3 (the position corresponding to a nonenergized state), it connects the upstream side of the brake fluid pressure adjuster 43 for the front right wheel FR to the wheel cylinder Wfr, and when it is in its second position (the position corresponding to an energized state), it shuts off communication between the upstream side of the brake fluid pressure adjuster 43 for the front right wheel FR and the wheel cylinder Wfr. When the pressure reducing valve PDfr is in its first position shown in FIG. 3 (the position corresponding to a nonenergized state), it shuts off communication between the wheel cylinder Wfr and the reservoir RS, and when it is in its second position (the position corresponding to an energized state), it connects the wheel cylinder Wfr and the reservoir RS.

With this structure, when the pressure increasing valve PUfr and the pressure reducing valve PDfr are each in their first position, the brake fluid pressure inside the wheel cylinder Wfr is increased by the supply of the fluid pressure on the upstream side of the brake fluid pressure adjuster 43 for the front right wheel FR to the inside of the wheel cylinder Wfr. When the pressure increasing valve PUfr is in its second position and the pressure reducing valve PDfr is in its first position, regardless of the fluid pressure in the upstream side of the brake fluid pressure adjuster 43 for the front right wheel FR, the fluid pressure in the wheel cylinder Wfr at that time is maintained. In addition, when the pressure increasing valve PUfr and the pressure reducing valve PDfr are each in their second position, the pressure in the wheel cylinder Wfr is decreased by the return of brake fluid from within the wheel cylinder Wfr to the reservoir RS.

A check valve CV1 which allows flow of the brake fluid in only one direction from the wheel cylinder Wfr to the upstream side of the brake fluid pressure adjuster 43 for the front right wheel FR is connected in parallel with the pressure increasing valve PUfr. As a result, when the control valve SA1 is in its first position and the brake pedal BP is released after being operated, the brake fluid pressure in the wheel cylinder Wfr is rapidly decreased.

Similarly, the brake fluid pressure adjuster 44 for the front left wheel FL, the brake fluid pressure adjuster 45 for the rear right wheel RR, and the brake fluid pressure adjuster 46 for the rear left wheel RL respectively comprise a pressure increasing valve PUfl and a pressure reducing valve PDfl, a pressure increasing valve PUrr and a pressure reducing valve PDrr, and a pressure increasing valve PUrl and a pressure reducing valve PDrl. By controlling the positions of each pressure increasing valve and pressure reducing valve, the brake fluid pressure in the wheel cylinder Wfl, the wheel cylinder Wrr, and the wheel cylinder Wrl can be increased, maintained, or decreased. Checks valves CV2, CV3, and CV4 are provided in parallel with the pressure increasing valves PUfl, PUrr, and PUrl, respectively, to provide the same function as the check valve CV1.

A check valve CV5 is connected in parallel with the control valve SA1 to allow flow of brake fluid in only one direction from the upstream side to the downstream side of the control valve SA1. When the control valve SA1 is in its second position and communication is cut off between the master cylinder MC and the brake fluid pressure adjuster 43 for the front right wheel FR and the brake fluid pressure adjuster 44 for the front left wheel FL, an increase in the brake fluid pressure in the wheel cylinders Wfr and Wfl is obtained by operation of the brake pedal BP. A check valve CV6 which performs the same function as the check valve CV5 is connected in parallel with the control valve SA2.

With the structure described above, when all the solenoid valves are in their first position, the brake fluid pressure controller 40 supplies brake fluid pressure corresponding to the operating force of the brake pedal BP to each wheel cylinder. In this state, by, for example, controlling the pressure increasing valve PUrr and the pressure reducing valve PDrr, the brake fluid pressure in just the wheel cylinder Wrr can be decreased by just a prescribed amount.

When the brake pedal BP is not being operated, i.e., when it is in a released state, by utilizing the high pressure generated by the high pressure generating portion 41, the brake fluid pressure controller 40 can increase the brake fluid pressure in only the wheel cylinder Wfr by a prescribed amount, while maintaining the brake fluid pressure in the wheel cylinder Wfl by, for example, switching each of the control valve SA1, the switching valve STR, and the pressure increasing valve PUfl to its second position and controlling the pressure increasing valve PUfr and the pressure reducing valve PDfr. In this manner, regardless of the operation of the brake pedal BP, the brake fluid pressure controller 40 can independently control the brake fluid pressure in the wheel cylinder of each wheel, and it can independently apply a prescribed braking force to each wheel.

Referring again to FIG. 1, the sensor portion 50 comprises wheel speed sensors 51fl, 51 fr, 51 rl, and 51 rr which comprise rotary encoders which each output a signal having a pulse each time the corresponding wheel FL, FR, RL, or RR rotates by a prescribed angle; a steering-member angle sensor 52 as a steering-member-angle obtaining means which senses the rotational angle of the steering wheel 21 from a neutral position and outputs a signal indicating the steering-member angle $\theta$s; an accelerator operation sensor 53 which senses the amount of operation of the accelerator pedal AP operated by the driver and outputs a signal which indicates the amount of operation Accp of the accelerator pedal AP; a lateral acceleration sensor 54 serving as an index value obtaining means for detecting a lateral acceleration (excessive roll generating tendency index value), which is an component of actual acceleration acting on the vehicle as measured along the lateral direction of the vehicle body, and for outputting a signal indicative of lateral acceleration Gy (m/s$^2$); a brake switch 55 which senses whether the brake pedal BP is being operated by the driver and outputs a signal indicating whether brake operation is taking place; vehicle height sensors 56fl, 56fr, 56rl, and 56rr which detect the heights of specific portions of the vehicle body in the vicinity of the wheels FL, FR, RL, and RR, respectively, as measured from the road surface and output signals indicating the vehicle heights Hfl, Hfr, Hrl, and Hrr, respectively; and a torque sensor 57 which detects steering torque generated when the driver rotates the steering wheel 21 and outputs a signal indicative of the steering torque T.

The steering-member angle $\theta$s is zero when the steering wheel 21 is in its neutral position, it becomes a positive value when the steering wheel 21 is rotated in the counterclockwise direction (as seen by the driver) from the neutral position, and it becomes a negative value when the steering wheel 21 is rotated in the clockwise direction from the neutral position. The lateral acceleration Gy is a positive value when the vehicle is turning to the left, and it is a negative value when the vehicle is turning to the right. The steering torque T becomes a positive value when the driver rotates the steering wheel 21 in the counterclockwise direction (as seen by the driver), and becomes a negative value when the driver rotates the steering wheel 21 in the clockwise direction (as seen by the driver).

The electronic controller 60 is a microcomputer including a CPU 61, a ROM 62 in which are previously stored routines (programs) which are executed by the CPU 61, tables (look-up tables and maps), constants, and the like, a RAM 63 in which the CPU 61 temporarily stores data as necessary, a backup RAM 64 which store data when the power supply is on and which maintains the stored data when the power supply is cut off, an interface 65 containing an A/D converter, and the like, the above components being interconnected by buses. The interface 65 is connected to the above sensors 51 - 57 and supplies signals from the sensors 51 - 57 to the CPU 61, and it outputs drive signals to each of the electric motor 23c of the front-wheel steering mechanism portion 20, the solenoid valves and the motor M of the brake fluid pressure controller 40, the throttle valve actuator 32, and the fuel injection apparatus 33 in accordance with instructions from the CPU 61.

By virtue of the above-described configuration, the electric motor 23c generates a predetermined assist force; the throttle valve actuator 32 drives the throttle valve TH so that the opening of the throttle valve TH becomes an opening corresponding to the operating amount Accp of the accelerator pedal AP; and the fuel injection apparatus 33 sprays the necessary amount of fuel so as to obtain a target air-fuel ratio (a theoretical air-fuel ratio) with respect to the air intake amount corresponding to the opening of the throttle valve TH.

(Summary of Steering Control for the Vehicle according to the Present Invention)

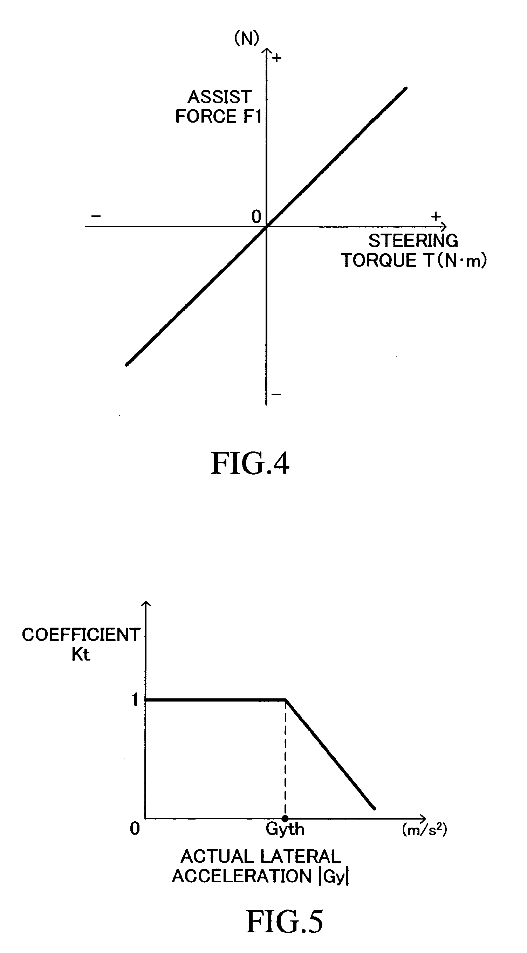

The steering apparatus for the vehicle according to the present invention calculates an assist force F1 corresponding to a steering torque T imparted by the driver, in accordance with a predetermined characteristic; i.e., with reference to a table shown in FIG. 4, which shows the predetermined characteristic; i.e., the relation between steering torque T and assist force F1 which the electric motor 23c of FIG. 2 must generate in accordance with the steering torque T.

At that time, as shown in FIG. 4, the assist force F1 corresponding to the steering torque T is calculated in such a manner that the absolute value of the assist force F1 increases with the absolute value of the steering torque T. Further, the assist force F1 becomes a positive value when the steering torque T becomes a positive value (when the driver rotates the steering wheel 21 in the counterclockwise direction (as seen by the driver)), whereby the assist force F1 serves as a force in a direction for steering the steerable wheels FL and FR to the left. Meanwhile, the assist force F1 becomes a negative value when the steering torque T becomes a negative Value (when the driver rotates the steering wheel 21 in the clockwise direction (as seen by the driver)), whereby the assist force F1 serves as a force in a direction for steering the steerable wheels FL and FR to the right. Accordingly, the assist force F1 assists the steering operation of the driver.

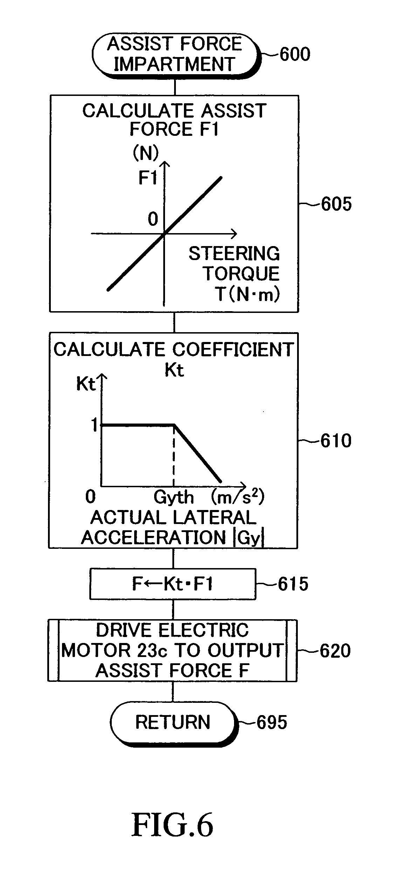

Next, the present apparatus calculates a value of a coefficient Kt on the basis of the absolute value of the actual lateral acceleration Gy which acts on the vehicle and is detected by the lateral acceleration sensor 54 as the excessive roll generating tendency index value, and with reference to a table shown in FIG. 5, which represents the relation between the absolute value of the actual lateral acceleration Gy and the value of the coefficient Kt. The coefficient Kt is a coefficient for changing the predetermined characteristic; i.e., modifying the assist force F1 in accordance with the absolute value of the actual lateral acceleration Gy so as to determine a final assist force F which the electric motor 23c finally generates.

As shown in FIG. 5, when the absolute value of the actual lateral acceleration Gy is not greater than a value Gyth, the coefficient Kt is set to assume a constant value of 1, and when the absolute value of the actual lateral acceleration Gy is greater than Gyth, the coefficient Kt is set to assume a positive value which decreases linearly from 1 as the absolute value of the actual lateral acceleration Gy increases from the value Gyth. The present apparatus calculates the final assist force F using the following Equation (1).

$$F = Kt \cdot F1 \qquad (1)$$

Accordingly, when the absolute value of the actual lateral acceleration Gy is not greater than the value Gyth, the final assist force F becomes equal to the assist force F1 determined in accordance with the steering torque T, and when the absolute value of the actual lateral acceleration Gy is greater than Gyth, the final assist force F is set in such a manner that the absolute value of the final assist force F decreases as compared with the absolute value of the assist force F1 as the absolute value of the actual lateral acceleration Gy increases from the value Gyth. In other words, the above-described, predetermined characteristic is not changed when the excessive roll generating tendency index value (the absolute value of the actual lateral acceleration Gy) is not greater than a predetermined value (the value Gyth), and is changed with an increase in the excessive roll generating tendency index value, when the excessive roll generating tendency index value is greater than the predetermined value.

Then, the present apparatus drives the electric motor 23c of FIG. 2 so that the electric motor 23c generates the final assist force F, set in the above-described manner. As a result, the steering operation of the driver is assisted by means of the final assist force F.

Meanwhile, the vehicle motion control apparatus 10 including the present apparatus calculates a target lateral acceleration Gyt (m/s$^2$) using the following Equation (2), which is a theoretical equation expressing a prescribed rule derived from a model of vehicle motion. The target lateral acceleration Gyt is a positive value when the vehicle is turning to the left (when the steering-member angle θs (degrees) is a positive value), and is a negative value when the vehicle is turning to the right (when the steering-member angle θs is a negative value). This theoretical equation calculates a theoretical value of the lateral acceleration acting on the vehicle when the vehicle is turning in a state in which the steering-member angle and the vehicle-body speed are both constant (steady circle turning).

$$Gyt = (Vso^2 \cdot \theta s)/(n \cdot I) \cdot (1/(1 + Kh \cdot Vso^2)) \qquad (2)$$

In Equation (2), Vso is the estimated vehicle body speed (m/s), which is calculated as described below. n is the steering gear ratio (in the present embodiment, a constant value of 20), which is the ratio of a change in rotational angle of the steering wheel 21 to a change in steering angle of the steerable wheels FL and FR. I is the wheel base (m) of the vehicle, which is a fixed value which is determined by the vehicle body. Kh is a stability factor (s$^2$/m$^2$), which is a fixed value determined by the vehicle body.

Further, the vehicle motion control apparatus 10 including the present apparatus calculates a lateral acceleration deviation ΔGy (m/s$^2$), which is the deviation between the absolute value of the target lateral acceleration Gyt calculated as described above and the absolute value of the actual lateral acceleration Gy detected by means of the lateral acceleration sensor 54, using the following Equation (3).

$$\Delta Gy = |Gyt| - |Gy| \qquad (3)$$

When the value of the lateral acceleration deviation ΔGy is positive, the vehicle is in a state in which the turning radius of the vehicle is larger than it would be if the lateral acceleration of the vehicle were the target lateral acceleration Gyt (referred to below as an understeering state). Therefore, the vehicle motion control apparatus 10 performs understeering suppression control for suppressing the understeering state. Specifically, the vehicle motion control apparatus 10 generates a prescribed braking force depending upon the value of the lateral acceleration deviation ΔGy in the rear wheel on the radially inner side of the turn and forcibly generates a yawing moment in the same direction as the direction of turning of the vehicle. As a result of the yawing moment, the absolute value of the actual lateral acceleration Gy increases, and the actual lateral acceleration Gy is controlled so as to approach the target lateral acceleration Gyt.

When the value of the lateral acceleration deviation ΔGy is negative, the vehicle is in a state in which the turning radius of the vehicle is smaller than it would be if the lateral acceleration of the vehicle were the target lateral acceleration Gyt (referred to below as an oversteering state), and the vehicle has a large roll angle because the absolute value of the actual lateral acceleration Gy acting on the vehicle is large. In such a state, the vehicle motion control apparatus 10 performs oversteering suppression control for suppressing the oversteering state. Specifically, the vehicle motion control apparatus 10 generates a prescribed braking force depending upon the value of the lateral acceleration deviation ΔGy in the front wheel on the radially outer side of the turn and forcibly generates a yawing moment in the direction opposite the direction of turning of the vehicle. As a result of the yawing moment, the absolute value of the actual lateral acceleration Gy decreases, and the actual lateral acceleration Gy is controlled so as to approach the target lateral acceleration Gyt, whereby the roll angle of the vehicle body decreases, and the vehicle body is prevented from rolling excessively.

In this manner, by performing understeering suppression control or oversteering suppression control (collectively referred to below as "braking steering control"), the vehicle motion control apparatus 10 controls the braking force applied to each wheel and generates a prescribed yawing moment in the vehicle in the direction such that the actual lateral acceleration Gy approaches the target lateral acceleration Gyt, which is calculated as described above. At the time of performing braking steering control, when it is necessary to also perform one of anti-skid control, front-rear braking force distribution control, and traction control, the vehicle motion control apparatus 10 determines the braking force applied to each wheel taking into consideration the braking force applied to each wheel for carrying out any one of these types of control. The above description is a summary of steering control and motion control of the vehicle according to the present invention.

(Actual Operation)

The actual operation of the vehicle motion control apparatus 10 including the steering apparatus for a vehicle according to the present invention having the above-described structure will be explained while referring to FIGS. 6 - 11, which show flow charts of routines which are executed by the CPU 61 of the electronic control apparatus 60. In the flow charts, the symbol ** attached to the end of various variables, flags, or symbols collectively represents the symbols fl, fr, rl, and rr and indicates that the particular variable, flag, or symbol applies to all of the wheels FR, FL, etc. of the vehicle. For example, the wheel speed Vw** collectively indicates the front left wheel speed Vwfl, the front right wheel speed Vwfr, the rear left wheel speed Vwrl, and the rear right wheel speed Vwrr.

At prescribed time intervals, the CPU 61 repeatedly performs a routine shown in FIG. 6 for calculating the assist force and imparting the assist fore. At a prescribed timing, the CPU 61 starts processing of the routine from Step 600. It proceeds to Step 605 and calculates the assist force F1 corresponding to the steering torque T on the basis of the operation torque T imparted by the driver and detected by means of the torque sensor 57, and with reference to the table illustrated in Step 605, which table is identical with that shown in FIG. 4.

Subsequently, the CPU 61 proceeds to Step 610 calculate the coefficient Kt on the basis of the absolute value of the actual lateral acceleration Gy detected by means of the lateral acceleration sensor 54, and with reference to the table illustrated in Step 610, which table is identical with that shown in FIG. 5. In Step 615 subsequent thereto, the CPU 61 calculates the final assist force F on the basis of the value of the assist force F1 calculated in Step 605 and the value of the coefficient Kt calculated in Step 610, and by making use of the equation described in Step 615, which equation corresponds to the right side of the above-mentioned Equation (1). Notably, Step 615 corresponds to the steering characteristic changing means.

Subsequently, the CPU 61 proceeds to Step 620 and controls the magnitude and direction of the drive force output by the electric motor 23c so that the electric motor 23c generates the final assist force F calculated in Step 615. Specifically, via the interface 65, the CPU 61 outputs to an unillustrated drive circuit for the electric motor 23c a duty signal which has a duty ratio corresponding to the absolute value of the final assist force F and determined in consideration of the polarity of the final assist force F. As a result, the drive circuit outputs to the electric motor 23c a current corresponding to the duty signal so as to control the electric motor 23c. After that, the CPU 61 proceeds to Step 695, and performs a return to complete this routine. In the above-described manner, the steering operation of the driver is assisted by means of the final assist force F.

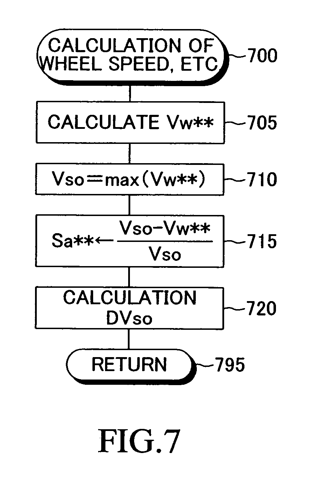

Next, calculation of the wheel speed and other parameters will be described. The CPU 61 repeatedly performs a routine shown in FIG. 7 at prescribed time intervals. At a prescribed timing, the CPU 61 starts processing of the routine from Step 700. It proceeds to Step 705 and calculates the wheel speed Vw** (the speed of the outer periphery of the wheel) for each wheel FR, FL, etc. Specifically, the CPU 61 calculates the wheel speed Vw** of each wheel FR, FL, etc. based on the time intervals between pulses of a signal which each wheel speed sensor 51** outputs.

Next, the CPU 61 proceeds to Step 710 and calculates the largest value of the wheel speed Vw** of each wheel FR, FL, etc. as the estimated vehicle-body speed Vso. The estimated vehicle-body speed Vso may also be calculated as the average of the wheel speed Vw** of each wheel FR, FL, etc. Step 710 corresponds to a vehicle-body speed obtaining means.

Next, the CPU 61 proceeds to Step 715 and calculates the actual slip rate Sa** for each wheel based on the value of the estimated vehicle-body speed Vso calculated in Step 710, the value of the wheel speed Vw** of each wheel FR, FL, etc. calculated in Step 705, and the equation shown in Step 715. As described below, the actual slip rate Sa** is used when calculating the braking force applied to each wheel.

Next, the CPU 61 proceeds to Step 720 and calculates the estimated vehicle body acceleration DVso, which is the differential with respect to time of the estimated vehicle body speed Vso, by making use of the following Equation (4).

$$DVso = (Vso - Vso1)/\Delta t \qquad (4)$$

In Equation (4), Vsol is a previous estimated vehicle body speed calculated in Step 710 during the previous execution of the present routine; $\Delta t$ represents the above-described prescribed intervals, which correspond to the calculation period of the present routine. Then, the CPU 61 proceeds to Step 795 and performs a return to complete this routine.

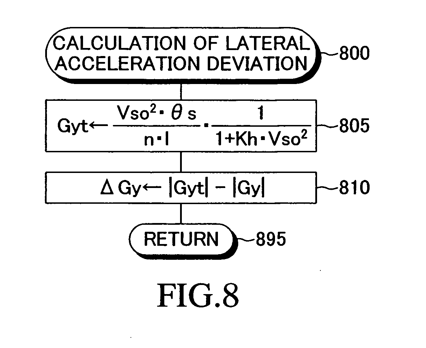

Next, the calculation of the lateral acceleration deviation will be described. The CPU 61 repeatedly executes the routine shown in FIG. 8 at prescribed intervals. At a prescribed timing, the CPU 61 starts processing of the routine from Step 800. It proceeds to Step 805 and calculates a target lateral acceleration Gyt on the basis of the value of the steering-member angle $\theta$s obtained from the steering-member angle sensor 52 and the value of the estimated vehicle-body speed Vso calculated in Step 710 of FIG. 7, and by making use of the equation shown in Step 805, which corresponds to the right side of the above-described Equation (2). Notably, Step 805 corresponds to the target lateral acceleration calculation means.

Next, the CPU 61 proceeds to Step 810 and calculates the lateral acceleration deviation $\Delta$Gy on the basis of the value of the target lateral acceleration Gyt calculated in Step 805 and the value of the actual lateral acceleration Gy obtained from the lateral acceleration sensor 54, and by making use of the equation shown in Step 810, which corresponds to the right side of the above-described Equation (3). The CPU 61 then proceeds to Step 895 and performs a return to complete this routine.

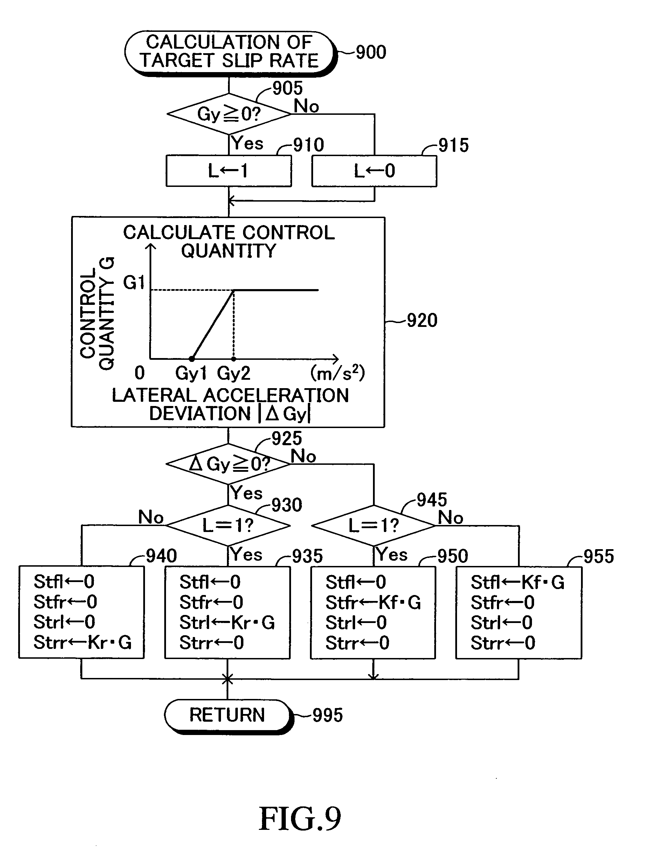

Next, there will be described calculation of the target slip rate for each wheel necessary for determining the braking force applied to each wheel when only the above-described braking steering control is executed. The CPU 61 repeatedly executes the routine shown in FIG. 9 at prescribed intervals. At a prescribed timing, the CPU 61 begins processing of this routine from Step 900. It proceeds to Step 905 and determines whether the value of the actual lateral acceleration Gy obtained by the lateral acceleration sensor 54 is at least 0. If the value of the actual lateral acceleration Gy is at least 0, a determination of Yes is made in Step 905, so the CPU 61 proceeds to Step 910 and sets a turning direction indicating flag L to 1. If the value of the actual lateral acceleration Gy is negative, a determination of No is made in Step 905, and the CPU 61 proceeds to Step 915 and sets the turning direction indicating flag L to 0.

The turning direction indicating flag L is a flag showing whether the vehicle is turning to the left or whether the vehicle is turning to the right. When its value is 1, it indicates that the vehicle is turning to the left, and when its value is 0, it indicates that the vehicle is turning to the right. Accordingly, the direction of turning of the vehicle is specified by the value of the turning direction indicating flag L.

Next, the CPU 61 proceeds to Step 920 and calculates a value of the control quantity G corresponding to the size of the yawing moment which should be generated in the vehicle by braking steering control based on the absolute value of the lateral acceleration deviation $\Delta$Gy calculated in Step 810 of FIG. 8 and the table shown in Step 920. As shown by the table shown in Step 920, when the absolute value of the lateral acceleration deviation $\Delta$Gy is less than or equal to a value Gy1, the control quantity G is set to 0, and when the absolute value of the lateral acceleration deviation $\Delta$Gy is at least the value Gy1 and less than or equal to a value Gy2, the control quantity G is set so as to vary linearly from 0 to a fixed positive value G1 as the absolute value of the lateral acceleration deviation $\Delta$Gy increases from the value Gy1 to the value Gy2. When the absolute value of the lateral acceleration deviation $\Delta$Gy is greater than or equal to Gy2, the value of the control quantity G is set so as to be maintained at the fixed positive value G1. In other words, braking steering control is not carried out when the absolute value of the lateral acceleration deviation $\Delta$Gy is less than or equal to the value Gy1, whereas when the absolute value of the lateral acceleration deviation $\Delta$Gy is greater than or equal to the value Gy1, the control quantity G is determined in accordance with the lateral acceleration deviation $\Delta$Gy based on the table shown in Step 920.

Next, the CPU 61 proceeds to Step 925 and determines whether the value of the lateral acceleration deviation $\Delta$Gy calculated in Step 810 of FIG. 8 is at least 0. If the value of the lateral acceleration deviation $\Delta$Gy is at least 0, the CPU 61 determines as described above that the vehicle is in an understeering state, and it proceeds to Step 930 for calculating the target slip rate for each wheel for carrying out the above-described understeering suppression control, and it determines whether the value of the turning direction indicating flag L is 1.

In the determination of Step 930, if the turning direction indicating flag L is 1, the CPU 61 proceeds to Step 935, and it sets the target slip rate Strl of the rear left wheel RL to a value equal to a coefficient Kr, which is a fixed positive value, multiplied by the value of the control quantity G calculated in Step 920. In addition, the target slip rates Stfl, Stfr, and Strr of the other wheels FL, FR, and RR are all set to 0. The CPU 61 then proceeds to Step 995 and performs a return to complete this routine. As a result, a target slip rate corresponding to the absolute value of the lateral acceleration deviation $\Delta$Gy is set for only the rear left wheel RL, which is the rear wheel on the radially inner side of a turn when the vehicle is turning to the left.

On the other hand, when the turning direction indicating flag L is determined to be 0 in Step 930, the CPU 61 proceeds to Step 940 and sets the target slip rate Strr for the rear right wheel RR to a value equal to the above-mentioned coefficient Kr multiplied by the value of the control quantity G calculated in Step 920. In addition, it sets the target slip rates Stfl, Stfr, Strl for all the other wheels FL, FR, and RL to 0. The CPU 61 then proceeds to Step 995 and performs a return to complete this routine. As a result, a target slip rate corresponding to the absolute value of the lateral acceleration deviation ΔGy is set for only the rear right wheel RR, which is the rear wheel on the radially inner side of a turn when the vehicle is turning to the right.

When the lateral acceleration deviation ΔGy is determined to be a negative value in Step 925, the CPU 61 determines as described above that the vehicle is in an oversteering state, so it proceeds to Step 945 to calculate the target slip rate of each wheel for carrying out the above-described oversteering suppression control, and it is determined whether the value of the turning direction indicating flag L is 1.

If the turning direction indicating flag L is determined to be 1 in Step 945, the CPU 61 proceeds to Step 950 and sets the target slip rate Stfr of the front right wheel FR to a value equal to a coefficient Kf, which is a fixed positive value, multiplied by the value of the control quantity G calculated in Step 920. In addition, it sets the target slip rates Stfl, Strl, and Strr of all the other wheels FL, RL, and RR to 0. The CPU 61 then proceeds to Step 995 and performs a return to complete this routine. As a result, a target slip rate corresponding to the absolute value of the lateral acceleration deviation ΔGy is set for only the front right wheel FR, which is the front wheel on the radially outer side of a turn when the vehicle is turning to the left.

On the other hand, when the turning direction indicating flag L is determined to be 0 in Step 945, the CPU 61 proceeds to Step 955 and sets the target slip rate Stfl for the front left wheel FL to a value equal to the above-mentioned coefficient Kf multiplied by the value of the control quantity G calculated in Step 920. In addition, it sets the target slip rates Stfr, Strl, Strr for all the other wheels FR, RL, and RR to 0. The CPU 61 then proceeds to Step 995 and performs a return to complete this routine. As a result, a target slip rate corresponding to the absolute value of the lateral acceleration deviation ΔGy is set for only the front left wheel FL, which is the front wheel on the radially outer side of a turn when the vehicle is turning to the right. In this manner, the target slip rate for each wheel necessary for determining the braking force to be applied to each wheel when carrying out only braking steering control is determined.

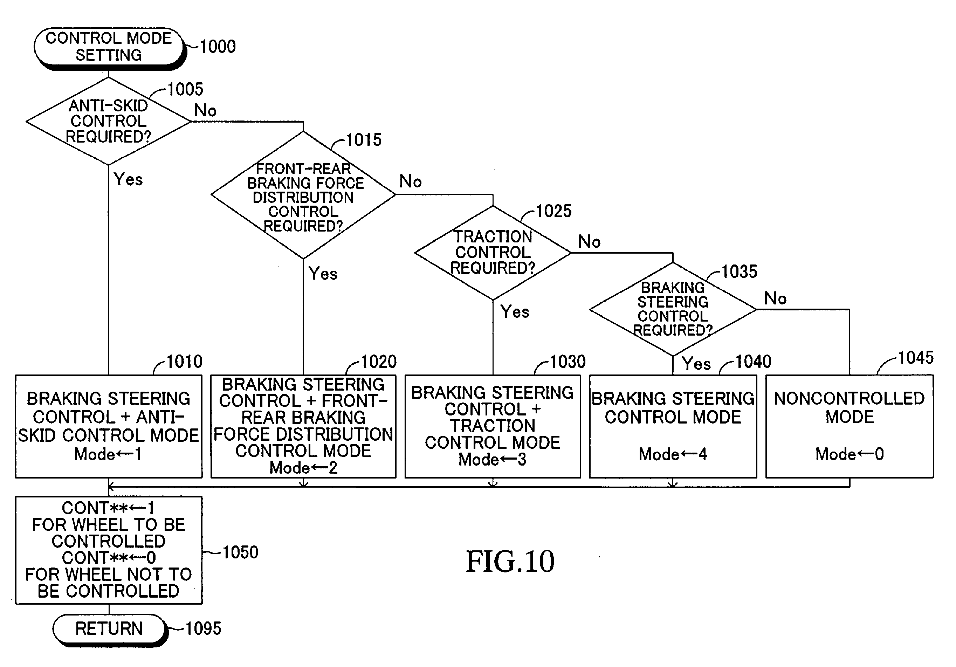

Next, setting of the control mode of the vehicle will be described. The CPU 61 repeatedly performs the routine shown in FIG. 10 at predetermined intervals. At a prescribed timing, the CPU 61 starts processing from Step 1000. It proceeds to Step 1005 and determines whether anti-skid control is necessary at the present time. Anti-skid control is control which decreases the braking force in a specified wheel when the specified wheel is locked when the brake pedal BP is being operated. The details of anti-skid control are well known, so an explanation of the details will be omitted here.

Specifically, in Step 1005, when the brake switch 55 indicates that the brake pedal BP is being operated and the value of the actual slip rate Sa** for a specified wheel calculated in Step 715 of FIG. 7 is at least a prescribed positive value, the CPU 61 determines that anti-skid control is necessary.

When it is determined in Step 1005 that anti-skid control is necessary, the CPU 61 proceeds to Step 1010 and sets the value of the variable Mode to 1 to set the control mode for performing both braking steering control and anti-skid control. The CPU 61 then proceeds to Step 1050.

When it is determined in Step 1005 that anti-skid control is not necessary, the CPU 61 proceeds to Step 1015 and determines whether front-rear braking force distribution control is necessary at the present time. Front-rear braking force distribution control is a form of control which decreases the ratio (the distribution) of the braking force for the rear wheels with respect to the braking force for the front wheels in accordance with the magnitude of the deceleration in the fore and aft direction of the vehicle during a state in which the brake pedal BP is being operated. The details of front-rear braking force distribution control are well known, so an explanation of the details thereof will be omitted here.

Specifically, in Step 1015, the CPU 61 determines that front-rear braking force distribution control is necessary, when the brake switch 55 indicates that the brake pedal BP is being operated, the estimated vehicle body acceleration DVso calculated in Step 720 of FIG. 7 is a negative value, and the absolute value of the estimated vehicle body acceleration DVso is at least a prescribed value.

If it is determined in Step 1015 that front-rear braking force distribution control is necessary, the CPU 61 proceeds to Step 1020, it sets the value of the variable Mode to 2 to set the control mode to one for performing both braking steering control and front-rear braking force distribution control, and then it proceeds to Step 1050.

When it is determined in Step 1015 that front-rear braking force distribution control is not necessary, the CPU 61 proceeds to Step 1025 and determines whether traction control is necessary at the present time. Traction control is control which increases the braking force to a specified wheel or decreases the drive force of the engine 31 when spinning of a specified wheel occurs in the direction in which a drive force is generated by the engine 31 when the brake pedal BP is not being operated. The details of traction control are well known, so an explanation of the details thereof will be omitted here.

Specifically, in Step 1025, when it is indicated by the brake switch 55 that the brake pedal BP is not being operated and when the actual slip rate Sa** of a specified wheel calculated in Step 715 of FIG. 7 is a negative value and the absolute value of the actual slip rate Sa** is at least a prescribed value, the CPU 61 determines that traction control is necessary.

If it is determined in Step 1025 that traction control is necessary, the CPU 61 proceeds to Step 1030, it sets the value of the variable Mode to a value of 3 for setting the control mode to perform both braking steering control and traction control, and it proceeds to Step 1050.

If it is determined in Step 1025 that traction control is not necessary, the CPU 61 proceeds to Step 1035 and determines whether the above-described braking steering control is necessary at the present time. Specifically, in Step 1035, when the absolute value of the lateral acceleration deviation $\Delta Gy$ calculated in Step 810 of FIG. 8 is greater than or equal to the value Gy1 in the table shown in Step 920 of FIG. 9, a specified wheel exists for which the value of the target slip rate St** set in FIG. 9 is not 0, so it is determined that braking steering control is necessary.

In Step 1035, if it is determined that braking steering control is necessary, the CPU 61 proceeds to Step 1040, it sets the value of the variable Mode to 4 to set the control mode so as to perform only braking steering control, and then it proceeds to Step 1050. On the other hand, if it is determined in Step 1035 that braking steering control is not necessary, the CPU 61 proceeds to Step 1045, it sets the value of the variable Mode to 0 to set a noncontrolled mode in which motion control of the vehicle is not carried out, and then it proceeds to Step 1050. In this case, a specified wheel which should be controlled does not exist.

When the CPU 61 proceeds to Step 1050, it sets the flag CONT** for the wheels to be controlled to 1, and it sets the flag CONT** for the noncontrolled wheels which are not controlled to 0. The wheels to be controlled in Step 1050 are wheels for which it is necessary to control at least one of the pressure increasing valves PU** and the pressure reducing valves PD** shown in FIG. 3.

Accordingly, when, for example, the brake pedal BP is not being operated and Step 950 of FIG. 9 is proceeded to, it is necessary to increase only the brake fluid pressure of the wheel cylinder Wfr for the front right wheel FR. Therefore, by switching each of the control valve SA1, the switching valve STR, and the pressure increasing valve PUfl shown in FIG. 3 to its second position and controlling each of the pressure increasing valve PUfr and the pressure reducing valve PDfr, the brake fluid pressure only in the wheel cylinder Wfr is increased by utilizing the high pressure generated by the high pressure generating portion 41 ; while the brake fluid pressure in the wheel cylinder Wfl is maintained. Accordingly, in this case, the wheels to be controlled include not only the front right wheel FR but also the front left wheel FL. After the CPU 61 executes Step 1050, it proceeds to Step 1095 and performs a return to complete this routine. In this manner, the control mode is specified, and the wheels to be controlled are also specified.

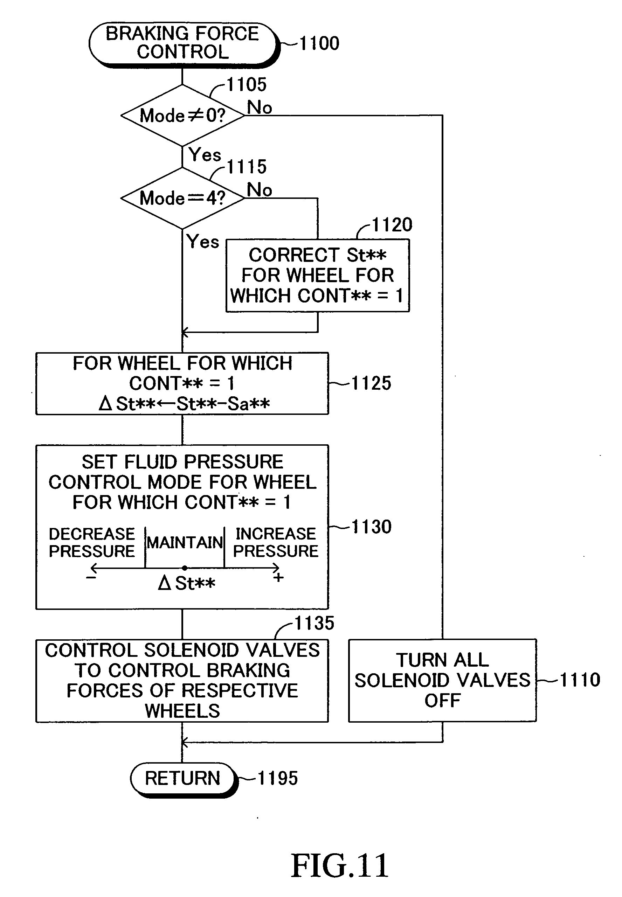

Next, control of the braking force applied to each wheel will be described. The CPU 61 repeatedly executes the routine shown in FIG. 11 at prescribed intervals. At a prescribed timing, the CPU 61 starts processing from Step 1100, and it proceeds to Step 1105 to determine whether the value of the variable Mode is 0. If the value of the variable Mode is 0, the CPU 61 makes a determination of No in Step 1105 and proceeds to Step 1110, in which it sets all of the solenoid valves in the brake fluid pressure controller 40 to OFF (a nonenergized state) because it is not necessary to perform brake control with respect to any wheel. The CPU 61 then proceeds to Step 1195 and performs a return to complete this routine. As a result, a brake fluid pressure corresponding to the operating force applied to the brake pedal BP by the driver is supplied to each wheel cylinder W**.

On the other hand, if it is determined in Step 1105 that the value of the variable Mode is not 0, the CPU 61 makes a determination of Yes in Step 1105 and proceeds to Step 1115, where it determines whether the value of the variable Mode is 4. If the value of the variable Mode is not 4 (namely, if anti-skid control or other type of control other than braking steering control is necessary), the CPU 61 makes a determination of No in Step 1115 and proceeds to Step 1120. In Step 1120, for each wheel for which the value of the flag ONT** was set to 1 in Step 1050 of FIG. 10, the CPU 61 corrects the value of the target slip rate St** which was set in FIG. 9 and which is necessary when performing only braking steering control. The CPU 61 then proceeds to Step 1125. As a result, the slip rate St** which was already set in FIG. 9 is corrected for each of the wheels to be controlled by an amount corresponding to the target slip rate for each wheel which is necessary when performing a type of control corresponding to the value of the variable Mode in addition to braking steering control.

When the value of the variable Mode is determined to be 4 in Step 1115, the CPU 61 makes a determination of Yes in Step 1115, and as it is not necessary to correct the target slip rate St** for each wheel which was already set in FIG. 9, the CPU 61 proceeds directly to Step 1125. In Step 1125, the CPU 61 calculates the slip rate deviation $\Delta St**$ for the wheels to be controlled for which the flag CONT** was set to 1 in Step 1050 of FIG. 10 based on the value of the target slip rate St**, the value of the actual slip rate Sa** calculated in Step 715 of FIG. 7, and the formula shown in Step 1125.

The CPU 61 then proceeds to Step 1130 and sets the fluid pressure control mode for each wheel to be controlled. Specifically, based on the value of the slip rate deviation ASt** for each wheel to be controlled which was calculated in Step 1125 and the table shown in Step 1130, the CPU 61 sets the fluid pressure control mode to "increase pressure" for each wheel to be controlled when the value of the slip rate deviation ASt** exceeds a prescribed positive reference value, it sets the fluid pressure control mode to "maintain" when the value of the slip rate deviation ΔSt** is greater than or equal to a prescribed negative reference value and at most the above-described positive reference value, and it sets the fluid pressure control mode to "decrease pressure" when the value of the slip rate deviation ΔSt** falls below the above-described prescribed negative reference value.

The CPU 61 then proceeds to Step 1135, and based on the fluid pressure control mode for each wheel to be controlled which was set in Step 1130, it controls the control valves SA1, SA2 and the switching valve STR shown in FIG. 3, and it controls the pressure increasing valves PU** and the pressure reducing valves PD** in accordance with the fluid pressure control mode for each wheel to be controlled.

Specifically, the CPU 61 controls the pressure increasing valve PU** and the pressure reducing valve PD** to its first position (the position of a nonenergized state) for each wheel for which the fluid pressure mode is "increase pressure", it controls the pressure increasing valve PU** to its second position (the position of an energized state) and it controls the pressure reducing valve PD** to its first position for each wheel for which the fluid pressure control mode is "maintain", and it controls both the pressure increasing valve PU** and the pressure reducing valve PD** to its second position (the position of an energized state) for each wheel for which the fluid pressure control mode is "decrease pressure".

As a result, the brake fluid pressure in the wheel cylinders W** of the wheels to be controlled for which the fluid pressure control mode is "increase pressure" increases, and the brake fluid pressure in the wheel cylinders W** of the wheels to be controlled for which the fluid pressure control mode is "decrease pressure" decreases, and the actual slip rate Sa** of each controlled wheel is controlled so as to approach the target slip rate St**. As a result, control corresponding to the control mode set in FIG. 10 is achieved. Step 1135 corresponds to the braking force control means.

When the control mode which is set by performing the routine of FIG. 10 is the control mode for performing traction control (the value of the variable Mode = 3) or the control mode for performing only braking steering control (the value of the variable Mode = 4), in order to decrease the drive force of the engine 31, if necessary, the CPU 61 controls the throttle valve actuator 32 so that the opening of the throttle valve TH is a smaller opening by just a prescribed amount than an opening corresponding to the operating amount Accp of the accelerator pedal AP. Then, the CPU 61 proceeds to Step 1195 and performs a return to complete this routine.

As described above, according to the first embodiment of the present invention, when the actual value of the lateral acceleration Gy which acts on the vehicle and is detected by means of the lateral acceleration sensor 54, is greater than Gyth, the (final) assist force F for a certain steering torque T which the driver applies to the steering wheel is set to be smaller as compared with the case where the actual value of the lateral acceleration Gy is not greater than Gyth, in such a manner that the assist force F decreases as the actual value of the lateral acceleration Gy increases. Accordingly, the steering torque T which the driver must apply to the steering wheel 21 increases, and thus it becomes difficult for the driver to perform abrupt steering operation, whereby the steering angle of the steerable wheels FL and FR of the vehicle is prevented from abruptly increasing in the turning direction. As a result, the increasing speed of the roll angle of the vehicle body decreases, and a sufficient time can be given to the driver, before the increasing roll angle becomes excessive, to perform steering operation in a direction for decreasing the roll angle, whereby the vehicle body is prevented from rolling excessively.

Moreover, the lateral acceleration deviation ΔGy is calculated through subtraction of the absolute value of the actual lateral acceleration Gy from the absolute value of the target lateral acceleration Gyt of the vehicle calculated by use of the above-described Equation (2), which is a theoretical equation derived from a model of vehicle motion. When the value of the lateral acceleration deviation ΔGy is negative; i.e., when the absolute value of the actual lateral acceleration Gy acting on the vehicle is large, which results in generation of a large roll angle of the vehicle body, oversteering suppression control is performed so as to generate a braking force depending upon the value of the lateral acceleration deviation ΔGy in the front wheel on the radially outer side of the turn and forcibly generate a yawing moment in the direction opposite the direction of turning of the vehicle. As a result of the yawing moment, the absolute value of the actual lateral acceleration Gy decreases, and the actual lateral acceleration Gy is controlled so as to approach the target lateral acceleration Gyt, whereby the roll angle of the vehicle body decreases, and the vehicle body is prevented from rolling excessively. By virtue of the above-described control, together with the above-described effect attained through control of the final assist force F in accordance with the actual lateral acceleration Gy, excessive rolling of the vehicle body can be prevented in a more reliable manner.

(Second Embodiment)

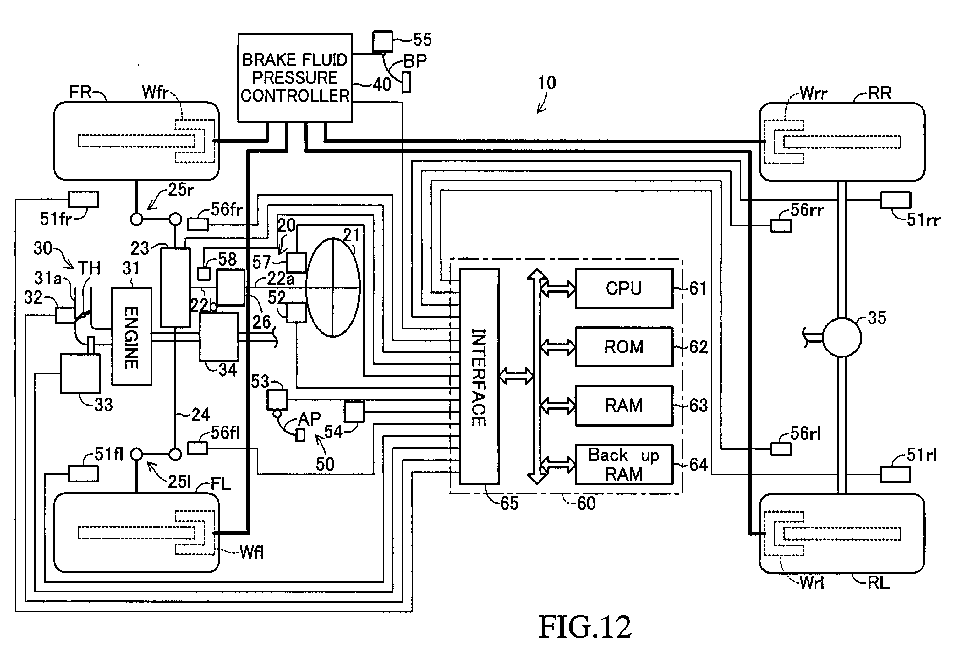

Next, a second embodiment of the present invention will be described. FIG. 12 is a schematic diagram of a vehicle equipped with a vehicle motion control apparatus 10 which includes a steering apparatus for a vehicle according to the second embodiment of the present invention.

The mechanical structure of the second embodiment shown in FIG. 12 differs from that of the first embodiment shown in FIG. 1 in that the sensor portion 50 includes a steering angle sensor 58 which detects the steering angle of the steerable wheels FL and FR and outputs a signal indicative of the steering angle θss to the interface 65 of the electronic controller 60 and in that a steering angle ratio variable actuator 26 is interposed in an intermediate portion of the column 22 with respect to the fore and aft direction of the vehicle body (an intermediate portion on the rear side of the circular external gear 23a of FIG. 2). These differences will be described below.

Because of interposition of the steering angle ratio variable actuator 26 into the column 22, the column 22 is divided into a column rear portion 22a having one end fixed to the steering wheel 21 and other end connected to the steering angle ratio variable actuator 26, and a column front portion 22b having one end connected to the steering angle ratio variable actuator 26 and the other end connected to the steering actuator 23.

The steering angle sensor 58 detects the rotation angle of the column front portion 22b to thereby detect the steering angle θss of the steerable wheels FL and FR, which changes in proportion to the rotational angle of the column front portion 22b. The steering angle θss of the steerable wheels FL and FR becomes 0 at a reference angle at which the vehicle goes straight. The steering angle θss of the steerable wheels FL and FR becomes a positive value when the steerable wheels FL and FR are turned to the left from the neutral position at which the steering angle θss coincides with the reference angle, and a negative value when the steerable wheels FL and FR are turned to the right from the neutral position.

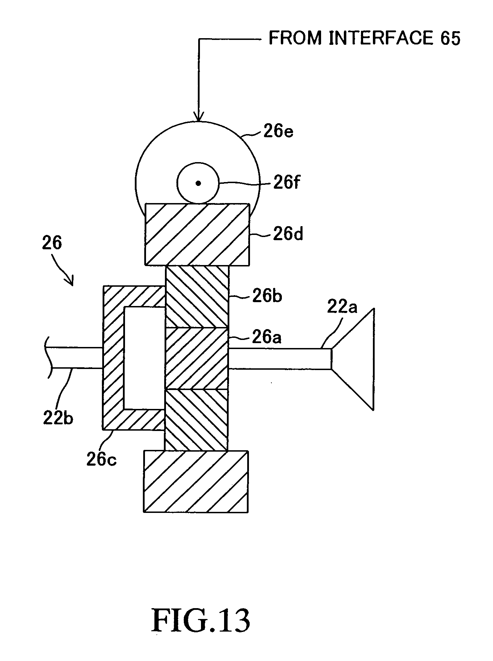

FIG. 13 schematically shows the structure of the steering angle ratio variable actuator 26. The steering angle ratio variable actuator 26 is composed of a so-called planetary gear mechanism which includes a sun gear 26a integrally connected to the column rear portion 22a; a plurality of (e.g., four) planet gears 26b disposed in meshing engagement with the sun gear 26a in such a manner that the planet gears 26 can revolve around the periphery of the sun gear 26a and rotate about their own axes; a carrier 26c configured to rotate together with the column front portion 22b in a manner interlocked with the revolving motion of the planet gears 26b; and a ring gear 26d disposed on the radially outer side of the plurality of planet gears 26b in such a manner that the ring gear 26d is in meshing engagement with the planet gears 26b and rotates concentrically with the sun gear 26a.

The he steering angle ratio variable actuator 26 also includes an electric motor 26e. A worm gear 26f is integrally fixed to the output shaft of the electric motor 26e, and is in meshing engagement with an unillustrated worm wheel gear integrally provided on the peripheral surface of the ring gear 26d. Moreover, the interface 65 of the electric controller 60 outputs a drive signal to the electric motor 26e in accordance with an instruction from the CPU 61.

By virtue of the above configuration, during a non-activated period in which the drive signal is not output from the CPU 61, the electric motor 26e can fix the (rotational) position of the ring gear 26d in a neutral position (a position at which the steering angle θss of the steerable wheels FL and FR becomes 0 when the steering-member angle θs is 0) by means of holding torque (detent torque). In this position, the steering angle ratio n, which is the ratio of the steering-member angle θs to the steering angle θss of the steerable wheels FL and FR (= θs/θss), is 20, which is the same as the steering gear ratio of the front-wheel steering mechanism portion 20 in the previously described first embodiment.

Meanwhile, when the ring gear 26d rotates upon drive of the electric motor 26e by the drive signal, the steering angle ratio n is changed in accordance with the rotational angle of the ring gear 26d from the neutral position. In other words, the CPU 61 can control the rotational angle of the ring gear 26d from the neutral position through drive of the electric motor 26e, and thus can control the steering angle ratio n (= θs/θss), which is the predetermined characteristic.

(Actual Operation)

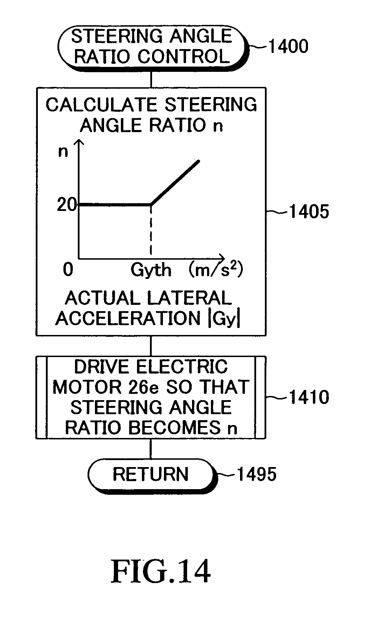

The actual operation of the vehicle motion control apparatus 10 according to the second embodiment which includes the steering apparatus for a vehicle according to the present invention and has the above-described structure will be explained with reference to flow charts of routines which are executed by the CPU 61 of the electronic control apparatus 60. In the second embodiment, at prescribed intervals, the CPU 61 repeatedly executes the routine of FIG. 14 for calculating and controlling the steering angle ratio n, as well as the above-described flow charts shown in FIGS. 6 to 11.

At a prescribed timing, the CPU 61 starts processing of the routine from Step 1400. It proceeds to Step 1405 and calculates the steering angle ratio n on the basis of the absolute value of the actual lateral acceleration Gy detected by means of the lateral acceleration sensor 54 and with reference to the table shown in Step 1405.

By virtue of the above-described routine, when the absolute value of the actual lateral acceleration Gy is not greater than the value Gyth, the steering angle ratio n is set to a constant value of 20, and when the absolute value of the actual lateral acceleration Gy is equal to or greater than Gyth, the steering angle ratio n is set to linearly increase from 20 as the absolute value of the actual lateral acceleration Gy increases from the value Gyth. In other words, the steering angle ratio n (the predetermined characteristic) is not changed when the excessive roll generating tendency index value (the absolute value of the actual lateral acceleration Gy) is not greater than a predetermined value (the value Gyth), and is changed with an increase in the excessive roll generating tendency index value, when the excessive roll generating tendency index value is equal to or greater than the predetermined value. Notably, the step 1405 corresponds to the steering characteristic changing means.

Subsequently, the CPU 61 proceeds to Step 1410 and controls the electric motor 26e so that the actual steering angle ratio coincides with the steering angle ratio n calculated in Step 1405. Specifically, the CPU 61 obtains the present value of the steering-member angle θs from the steering-member angle sensor 52 and obtain the present value of the steering angle oss of the steerable wheels FL and FR from the steering angle sensor 58, and controls the rotational angle of the ring gear 26d from the neutral position so that the actual steering angle ratio for the present steering-member angle θs coincides with the steering angle ratio n calculated in Step 1405, whereby the steering angle θss of the steerable wheels FL and FR is controlled. Subsequently, the CPU 61 proceeds to Step 1495 and performs a return to end the present routine.

As described above, according to the second embodiment of the present invention, when the actual value of the lateral acceleration Gy which acts on the vehicle and is detected by means of the lateral acceleration sensor 54, is greater than Gyth, the steering angle θss of the steerable wheels FL and FR for a certain steering-member rotation angle θs is set to decrease with an increase in the actual value of the lateral acceleration Gy, as compared with the case where the actual value of the lateral acceleration Gy is not greater than Gyth. Accordingly, even when the driver performs an abrupt steering operation in the turning direction (e.g., abrupt additional steering), the increase amount (change amount, increasing speed (changing speed)) of the steering angle θss of the steerable wheels FL and FR of the vehicle in the turning direction decreases. By virtue of the above-described control, together with the above-effect attained through control of the final assist force F in accordance with the actual lateral acceleration Gy described in the first embodiment, the steering angle of the steerable wheels FL and FR is prevented from abruptly increasing in the turning direction in a more reliably manner. As a result, the increasing speed of the roll angle of the vehicle body decreases, and a sufficient time can be given to the driver, before the increasing roll angle becomes excessive, to perform steering operation in a direction for decreasing the roll angle, whereby the vehicle body is prevented from rolling excessively.

The present invention is not restricted to the above-described embodiment, and various modifications can be made within the scope of the present invention. For example, in the above-described second embodiment, in addition to the control for changing the steering angle ratio n, the control of the final assist force F in accordance with the actual lateral acceleration Gy described in the first embodiment is executed. However, the second embodiment may be configured in such a manner that the control of the final assist force F in accordance with the actual lateral acceleration Gy is not performed, and only the control for changing the steering angle ratio n is executed. In this case, the table shown in Step 610 of FIG. 6 is changed in such a manner that the value of the coefficient Kt is always set in Step 610 to a constant value of 1 irrespective of the value of the actual lateral acceleration Gy.

In the above-described embodiments, the slip rate of each wheel of the vehicle is used as a control target for making the actual lateral acceleration Gy approach the target lateral acceleration Gyt, but any physical quantity may be used as a control target as long as it is a physical quantity which changes in accordance with the braking force applied to each wheel, such as the brake fluid pressure in the wheel cylinder W** of each wheel.

In the above-described embodiments, the value of the coefficient Kt calculated in Step 610 of FIG. 6 and the value of the steering angle ratio n calculated in Step 1405 of FIG. 14 are changed in accordance with the absolute value of the actual lateral acceleration Gy, which serves as the "excessive roll generating tendency index value." However, the embodiments may be configured to change the value of the coefficient Kt and the value of the steering angle ratio n in accordance with the absolute value of the roll angle θroll of the vehicle body, which serves as the "excessive roll generating tendency index value."

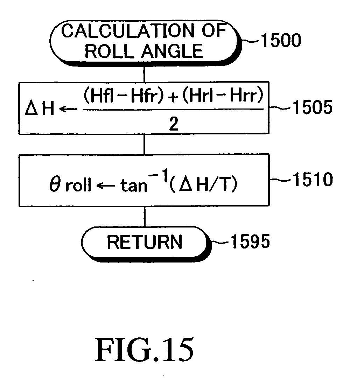

A specific process for this case will be described. At prescribed intervals, the CPU 61 repeatedly executes the routine shown in FIG. 15 so as to calculate the roll angle θroll. Accordingly, at a prescribed timing, the CPU 61 starts the routine from Step 1500. It proceeds to Step 1505 and calculates a vehicle height difference ΔH between the left side portion and the right side portion of the vehicle body on the basis of the values of the vehicle heights Hfl, Hfr, Hrl, and Hrr of the respective wheel portions as measured by the vehicle height sensors 56fl, 56fr, 56rl, and 56rr, and by making use of the equation shown in Step 1505.

Here, the vehicle height difference ΔH is the mean value of the vehicle height difference between the front left portion and the front right portion of the vehicle body and the vehicle height difference between the rear left portion and the rear right portion of the vehicle body. The vehicle height difference ΔH becomes a positive value when the vehicle height of the left side portion of the vehicle body is greater than the vehicle height of the right side portion of the vehicle body; i.e., when the vehicle is turning to the left, and a negative value when the vehicle height of the left side portion of the vehicle body is less than the vehicle height of the right side portion of the vehicle body; i.e., when the vehicle is turning to the right.

Subsequently, the CPU 61 proceeds to Step 1510 and calculates the roll angle θroll of the vehicle body on the basis of the vehicle height difference ΔH calculated in Step 1505 and the wheel tread T, which is the lateral distance between the center of the contract surface between the tire tread of the left wheel (e.g., left rear wheel RL) and the road surface and that of the right wheel (e.g., right rear wheel RR), and by making use of the equation shown in Step 1510. After that, the CPU 61 proceeds to Step 1595 and performs a return to end the present routine. As is apparent from the equation shown in Step 1510, the sign of the roll angle θroll becomes the same as that of the vehicle height difference ΔH. Therefore, the roll angle θroll becomes a positive value when the vehicle is turning to the left, and a negative value when the vehicle is turning to the right. Notably, Step 1510 corresponds to the index value obtaining means.

Subsequently, the CPU 61 calculates the coefficient Kt with reference to a table which corresponds to the table shown in Step 610 of FIG. 6 but is modified in such a manner that the horizontal axis represents the absolute value of the roll angle θroll calculated in Step 1510 of FIG. 5 instead of the absolute value of the actual lateral acceleration Gy, and the threshold Gyth is replaced with a threshold θrollth corresponding to the threshold Gyth. Further, the CPU 61 calculates the steering angle ratio n with reference to a table which corresponds to the table shown in Step 1405 of FIG. 14 but is modified in such a manner that the horizontal axis represents the absolute value of the roll angle θroll calculated in Step 1510 of FIG. 5 instead of the absolute value of the actual lateral acceleration Gy, and the threshold Gyth is replaced with a threshold θrollth corresponding to the threshold Gyth. In this manner, the value of the coefficient Kt and the value of the steering angle ratio n are changed in accordance with the absolute value of the roll angle θroll of the vehicle body.

Further, the value of the coefficient Kt calculated in Step 610 of FIG. 6 and the value of the steering angle ratio n calculated in Step 1405 of FIG. 14 may be used as the "excessive roll generating tendency index value" and changed in accordance with the absolute value of speed at which the driver rotates the steering wheel 21 (steering-member operation speed). In this case, the CPU 61 calculates the coefficient Kt and the steering angle ratio n with reference to tables which correspond to the table shown in Step 610 of FIG. 6 and the table shown in Step 1405 of FIG. 14, respectively, but are modified in such a manner that the horizontal axis of each table represents the absolute value of steering-member rotation speed θ's instead of the absolute value of the actual lateral acceleration Gy, and the threshold Gyth is replaced with a threshold θ'sth corresponding to the threshold Gyth. The steering-member rotation speed θ's is the differential with respect to time of the steering rotation angle θs and calculated by making use of the following Equation (5).

$$\theta's = (\theta s - \theta s1)/\Delta t \qquad (5)$$

In Equation (5), θs1 is a previous steering-member angle detected by means of the steering-member angle sensor 52 during the previous execution of the routine of FIG. 6 or FIG. 14; and Δt represents the above-described prescribed intervals, which correspond to the calculation period of the respective routine.

Moreover, the "excessive roll generating tendency index value" may be the total sum of the absolute value of the actual lateral acceleration Gy, the absolute value of the roll angle θroll, and the absolute value of the steering-member rotation speed θ's, or the total sum of values (weighted values) obtained through multiplication of these absolute values by predetermined coefficients. Also, one of these absolute values which exceeds the corresponding threshold may be used as the "excessive roll generating tendency index value" (in the case where a plurality of absolute values exceed the corresponding thresholds, an absolute value which has the largest deviation from the corresponding threshold is employed as the excessive roll generating tendency index value).

**Claims**

1. A steering apparatus for a vehicle equipped with a steerable-wheel steering mechanism which changes the steering angle of steerable wheels of the vehicle in accordance with displacement of a steering member operated by a driver and which generates a quantity related to assist force for assisting the operation of the steering member in accordance with a quantity related to operating force applied to the steering member by the driver and on the basis of a predetermined characteristic, the steering apparatus comprising:

    index value.obtaining means for obtaining an excessive roll generating tendency index value indicating the degree of a tendency of the vehicle to roll excessively; and
    steering characteristic changing means for changing the predetermined characteristic in accordance with the excessive roll generating tendency index value.

2. A steering apparatus for a vehicle equipped with a steerable-wheel steering mechanism which changes the steering angle of steerable wheels of the vehicle in accordance with position of a steering member operated by a driver and on the basis of a predetermined characteristic, the steering apparatus comprising:

    index value obtaining means for obtaining an excessive roll generating tendency index value indicating the degree of a tendency of the vehicle to roll excessively; and
    steering characteristic changing means for changing the predetermined characteristic in accordance with the excessive roll generating tendency index value.

3. A steering apparatus for a vehicle according to claim 1 or 2, wherein the excessive roll generating tendency index value is a value based on at least one of lateral acceleration, which is a component of acceleration acting on the vehicle in a vehicle-body lateral direction, roll angle of the vehicle, and operating speed of the steering member.

**Amended claims under Art. 19.1 PCT**

1. (amended) A steering apparatus for a vehicle, applied to a vehicle which has braking force control means for applying braking force to a predetermined wheel in accordance with motion condition of the vehicle so as to generate a yawing moment for stabilizing the motion condition of the vehicle, equipped with a steerable-wheel steering mechanism which changes the steering angle of steerable wheels of the vehicle in accordance with displacement of a steering member operated by a driver and which generates a quantity related to assist force for assisting the operation of the steering member in accordance with a quantity related to operating force applied to the steering member by the driver and on the basis of a predetermined characteristic, the steering apparatus comprising:

index value obtaining means for obtaining an excessive roll generating tendency index value indicating the degree of a tendency of the vehicle to roll excessively; and steering characteristic changing means for changing the predetermined characteristic in such a manner that the assist force for a certain operating force applied to the steering member decreases with increase of the degree of the tendency of the vehicle to roll excessively indicated by the obtained excessive roll generating tendency index value.

2. (amended) A steering apparatus for a vehicle, applied to a vehicle which has braking force control means for applying braking force to a predetermined wheel in accordance with motion condition of the vehicle so as to generate a yawing moment for stabilizing the motion condition of the vehicle, equipped with a steerable-wheel steering mechanism which changes the steering angle of steerable wheels of the vehicle in accordance with position of a steering member operated by a driver and on the basis of a predetermined characteristic, the steering apparatus comprising:

index value obtaining means for obtaining an excessive roll generating tendency index value indicating the degree of a tendency of the vehicle to roll excessively; and steering characteristic changing means for changing the predetermined characteristic in such a manner that the steering angle of steerable wheels for a certain position of the steering member decreases with increase of the degree of the tendency of the vehicle to roll excessively indicated by the obtained excessive roll generating tendency index value.

3. A steering apparatus for a vehicle according to claim 1 or 2, wherein the excessive roll generating tendency index value is a value based on at least one of lateral acceleration, which is a component of acceleration acting on the vehicle in a vehicle-body lateral direction, roll angle of the vehicle, and operating speed of the steering member.

FIG.1

EP 1 553 007 A1

FROM
INTERFACE 65

FIG.2

FIG.3

(N)

ASSIST
FORCE F1

0

STEERING
TORQUE T(N·m)

FIG.4

COEFFICIENT
Kt

1

0          Gyth          (m/s²)

ACTUAL LATERAL
ACCELERATION |Gy|

FIG.5

ASSIST FORCE IMPARTMENT ~600

CALCULATE ASSIST
FORCE F1

(N)

F1

0

STEERING
TORQUE
T(N·m)

~605

CALCULATE COEFFICIENT
Kt

Kt

1

0      Gyth   (m/s²)

ACTUAL LATERAL
ACCELERATION |Gy|

~610

$F \leftarrow Kt \cdot F1$ ~615

DRIVE ELECTRIC
MOTOR 23c TO OUTPUT
ASSIST FORCE F

~620

RETURN ~695

FIG.6

CALCULATION OF WHEEL SPEED, ETC — 700

CALCULATE $Vw**$ — 705

$Vso = max(Vw**)$ — 710

$Sa** \leftarrow \dfrac{Vso - Vw**}{Vso}$ — 715

CALCULATION $DVso$ — 720

RETURN — 795

# FIG.7

$$\text{CALCULATION OF LATERAL ACCELERATION DEVIATION} \quad 800$$

$$\text{Gyt} \leftarrow \frac{\text{Vso}^2 \cdot \theta \text{s}}{\text{n} \cdot \text{l}} \cdot \frac{1}{1 + \text{Kh} \cdot \text{Vso}^2} \quad 805$$

$$\Delta \text{Gy} \leftarrow |\text{Gyt}| - |\text{Gy}| \quad 810$$

$$\text{RETURN} \quad 895$$

# FIG.8

FIG.9

FIG.10

BRAKING FORCE CONTROL —1100

1105

Mode ≠ 0?  — No

Yes 1115

Mode = 4?  — No

1120

CORRECT St** FOR WHEEL FOR WHICH CONT** = 1

Yes

FOR WHEEL FOR WHICH CONT** = 1 ΔSt**←St**−Sa** —1125

SET FLUID PRESSURE CONTROL MODE FOR WHEEL FOR WHICH CONT** = 1 —1130

| DECREASE PRESSURE | MAINTAIN | INCREASE PRESSURE |

ΔSt**

− +

CONTROL SOLENOID VALVES TO CONTROL BRAKING FORCES OF RESPECTIVE WHEELS —1135

TURN ALL SOLENOID VALVES OFF —1110

RETURN —1195

FIG.11

FIG.12

EP 1 553 007 A1

FROM INTERFACE 65

26e

26f

26

26d

26b

22a

26a

22b

26c

FIG.13

STEERING ANGLE
RATIO CONTROL ~1400

CALCULATE STEERING
ANGLE RATIO n

ACTUAL LATERAL
ACCELERATION |Gy| ~1405

DRIVE ELECTRIC
MOTOR 26e SO THAT
STEERING ANGLE
RATIO BECOMES n ~1410

RETURN ~1495

FIG.14

CALCULATION OF
ROLL ANGLE —1500

$$\Delta H \leftarrow \frac{(Hfl - Hfr) + (Hrl - Hrr)}{2}$$ —1505

$$\theta\,roll \leftarrow \tan^{-1}(\Delta H/T)$$ —1510

RETURN —1595

# FIG.15

## INTERNATIONAL SEARCH REPORT

| | |
|---|---|
| | International application No.<br>PCT/JP03/09512 |

**A. CLASSIFICATION OF SUBJECT MATTER**
Int.Cl⁷ B62D6/00, B62D5/04

According to International Patent Classification (IPC) or to both national classification and IPC

**B. FIELDS SEARCHED**

Minimum documentation searched (classification system followed by classification symbols)
Int.Cl⁷ B62D6/00, B62D5/04

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2001-180511 A (Nissan Motor Co., Ltd.),<br>03 July, 2001 (03.07.01),<br>(Family: none) | 1,3<br>2 |
| X<br>A | JP 8-301137 A (Kubota Corp.),<br>19 November, 1996 (19.11.96),<br>(Family: none) | 1,3<br>2 |
| X<br>A | DE 4031317 A1 (Robert Bosch GmbH.),<br>09 April, 1992 (09.04.92),<br>& JP 4-257775 A | 2,3<br>1 |
| X<br>A | JP 7-39205 A (Kubota Corp.),<br>10 February, 1995 (10.02.95),<br>Fig. 2<br>(Family: none) | 2,3<br>1 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 October, 2003 (22.10.03) | 04 November, 2003 (04.11.03) |

| Name and mailing address of the ISA/<br>Japanese Patent Office | Authorized officer |
|---|---|
| Facsimile No. | Telephone No. |

Form PCT/ISA/210 (second sheet) (July 1998)

**EP 1 553 007 A1**

<table>
<tr><td colspan="2" align="center"><strong>INTERNATIONAL SEARCH REPORT</strong></td><td>International application No.<br>PCT/JP03/09512</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| P,X<br>P,A | JP 2003-112651 A  (Nissan Motor Co., Ltd.),<br>15 April, 2003 (15.04.03),<br>(Family: none) | 1,3<br>2 |
| A | US 6324446 B1  (Ford Global Technologies, Inc.),<br>07 August, 2001 (07.08.01),<br>& EP 1110834 A          & JP 2001-213345 A | 1-3 |
| A | JP 7-291140 A  (Kubota Corp.),<br>07 November, 1995 (07.11.95),<br>(Family: none) | 1-3 |

Form PCT/ISA/210 (continuation of second sheet) (July 1998)